# EUROPÄISCHE PATENTANMELDUNG

(11) **EP 3 428 439 A1**
(43) Veröffentlichungstag der Anmeldung: **16.01.2019**
(21) Anmeldenummer: 18181548.1
(22) Anmeldetag: 03.07.2018
(51) Int. Cl.: F02M 26/05, F02M 26/06, F02M 26/08, F02B 33/40, F02B 37/10, F02B 39/10, F02D 41/00

(54) **ABGASRÜCKFÜHRUNGSANORDNUNG EINES KRAFTFAHRZEUGES UND VERFAHREN ZUM BETRIEB EINER ABGASRÜCKFÜHRUNGSANORDNUNG**

(30) Priorität: 10.07.2017 DE 102017115374
(71) Anmelder: VOLKSWAGEN AKTIENGESELLSCHAFT, 38440 Wolfsburg (DE)
(72) Erfinder: POTT, Ekkehard, 38518 Gifhorn (DE); SIPPEL, Simon, 38170 Kneitlingen (DE)
(74) Vertreter: Rössler, Matthias

(57) **Zusammenfassung**

Abgasrückführungsanordnung 1 für eine Verbrennungskraftmaschine 2 mit einer Einlassseite 3 und einer Auslassseite 4 für ein Abgas, zumindest umfassend:
- eine Abgas-Hauptleitung 5 zur Aufnahme mindestens einer Abgasnachbehandlungseinheit 6, die an der Auslassseite 4 der Verbrennungskraftmaschine 2 anordenbar ist;
- eine erste Abgas-Rückführleitung 7, die einerseits mit der Abgas-Hauptleitung 5 und andererseits mit der Einlassseite 3 strömungsleitend verbindbar ist;
- eine Gaszuführung 8, welche mit der ersten Abgas-Rückführleitung 7 strömungsleitend verbindbar ist;
- einen Abgasturbolader 9, der mit der Abgas-Hauptleitung 5 und der ersten Abgas-Rückführleitung 7 zusammenwirkt; und
- einen elektrisch angetriebenen Verdichter 10, der in einem Abschnitt 11 der ersten Abgas-Rückführleitung 7 angeordnet ist;
wobei die erste Abgas-Rückführleitung 7 in einem Bereich 12 zwischen der Abgas-Hauptleitung 5 und dem Abgasturbolader 9 eine aktiv regelbare Kühlstrecke 13 und parallel dazu eine erste Bypassstrecke 14 hat.

Verfahren zum Betrieb einer Abgasrückführungsanordnung 1.

## Beschreibung

Die Erfindung betrifft eine Abgasrückführungsanordnung eines Kraftfahrzeuges sowie ein Verfahren zum Betrieb einer Abgasrückführungsanordnung. Das Verfahren wird in einem Kraftfahrzeug durchgeführt.

Aus der WO 98/54449 A1 ist eine Vorrichtung zur Abgasrückführung bei einer Verbrennungskraftmaschine bekannt, bei der Abgas über eine Niederdruck-Abgasrückführungseinrichtung und eine Hochdruck-Abgasrückführungseinrichtung zurück zur Einlassseite der Verbrennungskraftmaschine gefördert werden kann. Die Hochdruck-Abgasrückführungseinrichtung verbindet die Abgasleitung stromaufwärts des Abgasturboladers mit der Einlassseite. Stromaufwärts der Einlassseite ist ein Mischventil angeordnet, über das das Abgas der HD-Abgasrückführungseinrichtung zusammen mit Frischluft zusammengeführt wird. Zwischen dem Mischventil und der Einlassseite ist ein elektrisch betriebener Verdichter angeordnet, über den eine Verdichtung erfolgen kann.

Bei bestimmten Betriebspunkten ist ein Betrieb des Verdichters erforderlich oder wünschenswert. Dabei verringert sich jedoch eine Druckdifferenz zwischen der Einlassseite und der Auslassseite der Verbrennungskraftmaschine, so dass eine Abgasrückführung über die Hochdruck-Abgasrückführungseinrichtung nicht möglich ist.

Aufgabe der vorliegenden Erfindung ist es, die mit Bezug auf den Stand der Technik angeführten Probleme zumindest teilweise zu lösen. Insbesondere sollen eine Abgasrückführungsanordnung und ein Verfahren zum Betrieb einer Abgasrückführungsanordnung vorgeschlagen werden, durch die die Abgasreinigung verbessert werden kann.

Zur Lösung dieser Aufgaben trägt eine Abgasrückführungsanordnung mit den Merkmalen gemäß Patentanspruch 1 und ein Verfahren gemäß Patentanspruch 7 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Abgasrückführungsanordnung für eine Verbrennungskraftmaschine mit einer Einlassseite und einer Auslassseite für ein Abgas vorgeschlagen. Die Abgasrückführungsanordnung umfasst zumindest:
- eine Abgas-Hauptleitung zur Aufnahme mindestens einer Abgasnachbehandlungseinheit, die an der Auslassseite der Verbrennungskraftmaschine anordenbar ist;
- eine erste Abgas-Rückführleitung, die einerseits mit der Abgas-Hauptleitung und andererseits mit der Einlassseite strömungsleitend verbindbar ist;
- eine Gaszuführung, welche mit der ersten Abgas-Rückführleitung strömungsleitend verbindbar ist;
- einen Abgasturbolader, der mit der Abgas-Hauptleitung und der ersten Abgas-Rückführleitung zusammenwirkt; und
- einen elektrisch angetriebenen Verdichter, der in der ersten Abgas-Rückführleitung angeordnet ist.

Der elektrisch angetriebene Verdichter kann in einem Abschnitt der ersten Abgas-Rückführleitung zwischen dem Abgasturbolader und der Einlassseite (also stromabwärts des Abgasturboladers) oder zwischen der Gaszuführung (insbesondere stromabwärts eines Luftfilters) und dem Abgasturbolader (also stromaufwärts des Abgasturboladers) angeordnet sein.

Die erste Abgas-Rückführleitung hat in einem Bereich zwischen der Abgas-Hauptleitung und dem Abgasturbolader bzw. dem Verdichter eine (aktiv regelbare) Kühlstrecke und parallel dazu eine erste Bypassstrecke.

Die Verbrennungskraftmaschine weist eine Einlassseite und eine Auslassseite auf. Über die Einlassseite tritt ein zündfähiges bzw. brennfähiges Gasgemisch in die Brennräume der Verbrennungskraftmaschine ein. Über die Auslassseite tritt das Abgas in die Abgas-Hauptleitung ein.

Die mindestens eine Abgasnachbehandlungseinheit kann z. B. ein Partikelfilter, ein SCR-Katalysator, ein Oxidationskatalysator, ein Hydrolysekatalysator und/oder ein Adsorber sein, oder eine Kombination davon. Die Abgasnachbehandlungseinheit ist keineswegs auf die vorgeschlagenen Ausführungsformen beschränkt.

Die Abgas-Hauptleitung verbindet die Auslassseite der Verbrennungskraftmaschine unter anderem mit der Umgebung, an die das Abgas letztendlich abgeführt wird.

Die erste Abgas-Rückführleitung ist insbesondere eine Niederdruck-Abgas-Rückführleitung, die stromabwärts des Abgasturboladers von der Haupt-Abgasleitung abzweigt und einen vorgebbaren Teilabgasstrom der Einlassseite wieder zuführt.

Die Gaszuführung ist insbesondere mit der Umgebung verbunden und leitet Frischluft über die erste Abgas-Rückführleitung an die Einlassseite weiter.

Der Abgasturbolader wird über das Abgas in der Haupt-Abgasleitung angetrieben und dient der Verdichtung des über die Gaszuführung und/oder die erste Abgas-Rückführleitung zugeführten Gases (Abgas, Frischluft, etc.).

Der elektrisch angetriebene Verdichter ist in der ersten Abgas-Rückführleitung (z. B. zwischen der Gaszuführung und der Einlassseite und insbesondere stromaufwärts oder stromabwärts des Abgasturboladers) angeordnet und kann eine (zusätzliche) Verdichtung des Gases bewirken, das der Einlassseite zugeführt wird. Der Verdichter wird über eine elektrische Maschine angetrieben.

Die erste Abgas-Rückführleitung weist eine Kühlstrecke (mit einem Kühler) und eine erste Bypassstrecke zur Umgehung der Kühlstrecke (bzw. des Kühlers) auf. In der ersten Bypassstrecke sind insbesondere keine Einbauten wie Katalysatorträgerkörper und/oder Kühleraggregate vorgesehen. Bevorzugt umfasst die erste Bypassstrecke (nur) einen verschließbaren und zu öffnenden Rohrabschnitt. Die erste Bypassstrecke kann mit einer thermischen Isolierung und/oder Heizung ausgeführt sein.

Die erste Bypassstrecke kann verhindern, dass bei einer geringen Temperatur des Abgases eine weitere Abkühlung des Abgases in der ersten Abgas-Rückführleitung durch die Kühlstrecke erfolgt. Damit kann z. B. eine Tropfenschlagerosion am Abgasturbolader durch kondensiertes Abgas in der ersten Abgas-Rückführleitung verhindert werden. Damit kann bereits früher (also z. B. bei noch geringen Temperaturen des Abgases) bzw. nach einem Kaltstart schneller das Abgas über die erste Abgas-Rückführleitung zur Einlassseite zurückgeführt werden, so dass eine frühzeitige und effektive Verringerung der Schadstoffe im Abgas (insbesondere die Bildung von NOx) möglich ist.

Eine erste aktuelle Temperatur kann zumindest für das zuzuführende Gas, das Abgas oder ein Kühlmittel ermittelt und dann mit einem ersten Temperaturschwellwert verglichen werden. Wenn die erste aktuelle Temperatur den ersten Temperaturschwellwert erreicht hat, kann Abgas über die erste Bypassstrecke der ersten Abgas-Rückführleitung hin zur Einlassseite zurückgeführt werden.

Eine zweite aktuelle Temperatur kann zumindest für das zuzuführende Gas, das Abgas oder das Kühlmittel ermittelt und dann mit einem zweiten Temperaturschwellwert verglichen werden. Wenn die zweite aktuelle Temperatur den zweiten Temperaturschwellwert erreicht hat, kann Abgas über die Kühlstrecke der ersten Abgas-Rückführleitung hin zur Verbrennungskraftmaschine zurückgeführt werden. Der zweite Temperaturschwellwert ist insbesondere größer als der erste Temperaturschwellwert.

Die Abgasrückführungsanordnung kann zumindest zusätzlich eine in dem Abschnitt angeordnete zweite Bypassstrecke zur Umgehung des Verdichters aufweisen.

In der zweiten Bypassstrecke kann ein Rückschlagventil angeordnet sein, so dass bei einem Betrieb des Verdichters das in der ersten Abgas-Rückführleitung verdichtete Gas nicht über die zweite Bypassstrecke zurückströmen kann.

Zwischen dem Abschnitt und der Einlassseite kann eine Drosselklappe angeordnet sein.

Zwischen dem Abschnitt und der Einlassseite bzw. zwischen der Drosselklappe und der Einlassseite kann ein Ladeluftkühler angeordnet sein.

Die Abgasrückführungsanordnung kann zumindest zusätzlich eine zweite Abgas-Rückführleitung umfassen, die einerseits mit der Abgas-Hauptleitung stromaufwärts des Abgasturboladers und andererseits mit der Einlassseite stromabwärts des Verdichters, insbesondere stromabwärts der Drosselklappe, bevorzugt stromabwärts des Ladeluftkühlers, strömungsleitend verbindbar ist.

Die zweite Abgas-Rückführleitung ist insbesondere eine Hochdruck-Abgas-Rückführleitung, die von der Haupt-Abgasleitung stromaufwärts des Abgasturboladers abzweigt und das Abgas zur Einlassseite zurückführt.

In Betriebspunkten der Verbrennungskraftmaschine, in denen ein Betrieb des Verdichters erforderlich oder wünschenswert ist, verringert sich eine Druckdifferenz zwischen der Einlassseite und der Auslassseite der Verbrennungskraftmaschine. Eine Abgasrückführung über die Hochdruck-Abgas-Rückführungsleitung kann dann ggf. nicht wunschgemäß agieren. Für die Abgasbehandlung und zur Verringerung von Schadstoffen kann eine Abgasrückführung (gerade von Abgas mit einer höheren Temperatur) jedoch weiter wünschenswert sein.

Die hier vorgeschlagene Abgasrückführungsanordnung mit der ersten Bypassstrecke ermöglicht unter anderem, dass auch bei den vorgenannten Betriebspunkten die geforderte Abgasrückführung effektiv ist. Dazu wird das Abgas über die erste Abgas-Rückführungsleitung und in Abhängigkeit von der Temperatur (zumindest des zuzuführenden Gases, des Abgases oder des Kühlmittels) über die Kühlstrecke und/oder über die erste Bypassstrecke zurückgeführt. Das zurückgeführte Abgas wird nun über den Verdichter auf einen höheren ersten Druck verdichtet und über die Einlassseite der Verbrennungskraftmaschine zugeführt.

Die Anordnung von erster Abgas-Rückführleitung und zweiter Abgas-Rückführleitung zusammen mit der ersten Bypassstrecke ermöglicht damit eine Umgehung der zweiten Abgas-Rückführleitung.

Derartige Betriebspunkte, bei denen der Verdichter betrieben und das Abgas über die erste Bypassstrecke geleitet werden sollte, umfassen insbesondere Betriebspunkte nach einem Motorkaltstart bzw. Motorneustart, bei denen eine Anforderung nach der schnellen Bereitstellung eines erhöhten Ladedruckes vorliegt (z. B. Start von NEFZ: Neuer Europäischer Fahrzyklus; oder Start von WLTC: Worldwide Harmonized Light-Duty Vehicle Test Cycle).

Insbesondere ist in der ersten Bypassstrecke ein erstes Ventil angeordnet.

Die (aktiv regelbare) Kühlstrecke kann einen Kühler, insbesondere einen Flüssigkeitswärmetauscher als Kühler, umfassen.

In der (aktiv regelbaren) Kühlstrecke kann stromabwärts (oder stromaufwärts) von dem Kühler ein zweites Ventil angeordnet sein.

Über das erste Ventil und/oder das zweite Ventil kann eine Aufteilung der Teilabgasströme vorgenommen werden, die über die Kühlstrecke und/oder die erste Bypassstrecke hin zur Einlassseite zurückgeführt werden.

Eine Abgasrückführung ermöglicht das Zuführen eines (überwiegend) inerten Gases (Abgas) zur Einlassseite der Verbrennungskraftmaschine. Das inerte Gas behindert die schnelle Oxidation von Kraftstoffmolekülen. Die Temperaturspitzen und NOx-Emissionen können so abgesenkt werden.

Die zurückgeführten Abgase einer Hochdruck-Abgas-Rückführleitung haben eine hohe Temperatur. Durch die Zumischung des Abgases zur Frischluft (von der Gaszuführung) in der ersten Abgas-Rückführungsleitung kommt es zur Verringerung der Luftmasse. Dies hat zur Folge, dass die Füllung abnimmt und die Verbrennungskraftmaschine mit geringerem Luftverhältnis arbeitet, wobei zudem die mittlere Temperatur der Frischladung zunimmt.

Die zurückgeführten Abgase einer Niederdruck-Abgas-Rückführleitung haben eine geringere Temperatur und sind insbesondere partikelärmer, weil die Abgase weiter stromabwärts (und ggf. stromabwärts einer Abgasnachbehandlungseinheit) der Haupt-Abgasleitung entnommen werden. Hierdurch lassen sich insbesondere die folgenden Nachteile einer Hochdruck-Abgas-Rückführleitung beseitigen: Zum einen wird die Ansaugluft (von der Gaszuführung) nicht durch das sehr warme Abgas erwärmt und die Füllung vermindert, zum anderen wird der Abgasmassenstrom stromaufwärts des Abgasturboladers nicht reduziert, so dass eine Beibehaltung der hohen Abgasenthalpie ermöglicht ist.

Es wird weiter ein Verfahren zum Betrieb einer Abgasrückführungsanordnung einer Verbrennungskraftmaschine mit einer Einlassseite und einer Auslassseite für ein Abgas vorgeschlagen. Das Verfahren dient insbesondere dem Betrieb der vorstehend beschriebenen Abgasrückführungsanordnung. Die Abgasrückführungsanordnung umfasst zumindest:
- eine Abgas-Hauptleitung zur Aufnahme mindestens einer Abgasnachbehandlungseinheit, die an der Auslassseite der Verbrennungskraftmaschine anordenbar ist;
- eine erste Abgas-Rückführleitung, die einerseits mit der Abgas-Hauptleitung und andererseits mit der Einlassseite strömungsleitend verbindbar ist;
- eine Gaszuführung, welche mit der ersten Abgas-Rückführleitung strömungsleitend verbindbar ist;
- einen Abgasturbolader, der mit der Abgas-Hauptleitung und der ersten Abgas-Rückführleitung zusammenwirkt; und
- einen elektrisch angetriebenen Verdichter, der in der ersten Abgas-Rückführleitung angeordnet ist (z. B. stromabwärts der Gaszuführung und insbesondere in einem Abschnitt der ersten Abgas-Rückführleitung zwischen dem Abgasturbolader und der Einlassseite);
- eine zweite Abgas-Rückführleitung, die einerseits mit der Abgas-Hauptleitung stromaufwärts des Abgasturboladers und andererseits mit der Einlassseite stromabwärts des Verdichters strömungsleitend verbindbar ist.

Die erste Abgas-Rückführleitung hat in einem Bereich zwischen der Abgas-Hauptleitung und dem Abgasturbolader eine aktiv regelbare Kühlstrecke und parallel dazu eine erste Bypassstrecke. Das Verfahren umfasst zumindest die folgenden Schritte:
i. Erfassen eines Betriebspunktes der Verbrennungskraftmaschine, bei dem der Verdichter in Betrieb ist und eine Druckdifferenz zwischen einem ersten Druck an der Einlassseite und einem zweitem Druck an der Auslassseite kleiner ist als ein Druckschwellwert;
ii. Erfassen, ob eine Abgasrückführung erforderlich ist und wenn ja
iii. Rückführen des Abgases ausschließlich über die erste Abgas-Rückführleitung, wobei die zweite Abgas-Rückführleitung geschlossen ist; wobei das Abgas zumindest teilweise über die erste Bypassstrecke geleitet wird.
Die Ausführungen zu der eingangs erläuterten Abgasrückführungsanordnung gelten hier gleichermaßen und umgekehrt.

In Schritt i. des Verfahrens wird ein (aktuell vorliegender) Betriebspunkt der Verbrennungskraftmaschine erfasst, bei dem der Verdichter in Betrieb ist und eine Druckdifferenz zwischen einem ersten Druck an der Einlassseite und einem zweitem Druck an der Auslassseite kleiner ist als ein Druckschwellwert.

Der Druckschwellwert drückt aus, dass das Druckgefälle zwischen dem ersten Druck im Gasstrom an der Einlassseite und dem zweitem Druck im Abgasstrom an der Auslassseite zu gering ist, so dass eine Rückführung des Abgases von der Auslassseite zur der Einlassseite über die zweite Abgas-Rückführleitung nicht möglich ist.

In Schritt ii. wird erfasst, ob eine Abgasrückführung zur Reinigung des Abgases erforderlich ist.

In Schritt iii. wird das Abgas, wenn das Erfordernis gemäß Schritt ii. festgestellt wurde, ausschließlich über die erste Abgas-Rückführleitung zur Einlassseite zurückgeführt, wobei die zweite Abgas-Rückführleitung geschlossen ist oder verschlossen wird.

Das Abgas wird in Schritt iii. in Abhängigkeit von einer aktuellen Temperatur zumindest des zuzuführenden Gases, des Abgases oder eines Kühlmittels über die erste Bypassstrecke und/oder über die Kühlstrecke geführt.

Es wird weiter ein Kraftfahrzeug mit einer Verbrennungskraftmaschine mit einer Einlassseite und einer Auslassseite für ein Abgas und einer vorstehend beschriebenen Abgasrückführungsanordnung vorgeschlagen.

Weiter wird ein Kraftfahrzeug vorgeschlagen, wobei die Abgasrückführungsanordnung zusätzlich eine zweite Abgas-Rückführleitung umfasst, die einerseits mit der Abgas-Hauptleitung stromaufwärts des Abgasturboladers und andererseits mit der Einlassseite stromabwärts des Verdichters strömungsleitend verbindbar ist. Das Kraftfahrzeug ist zur Durchführung des vorstehend beschriebenen Verfahrens eingerichtet.

Die Ausführungen zu der Abgasrückführungsanordnung gelten gleichermaßen für das Verfahren und das Kraftfahrzeug und umgekehrt.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figur näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in der Figur erläuterten Sachverhalte zu extrahieren und mit anderen Bestandteilen und Erkenntnissen aus der vorliegenden Beschreibung zu kombinieren. Insbesondere ist darauf hinzuweisen, dass die Figur und insbesondere die dargestellten Größenverhältnisse nur schematisch sind.

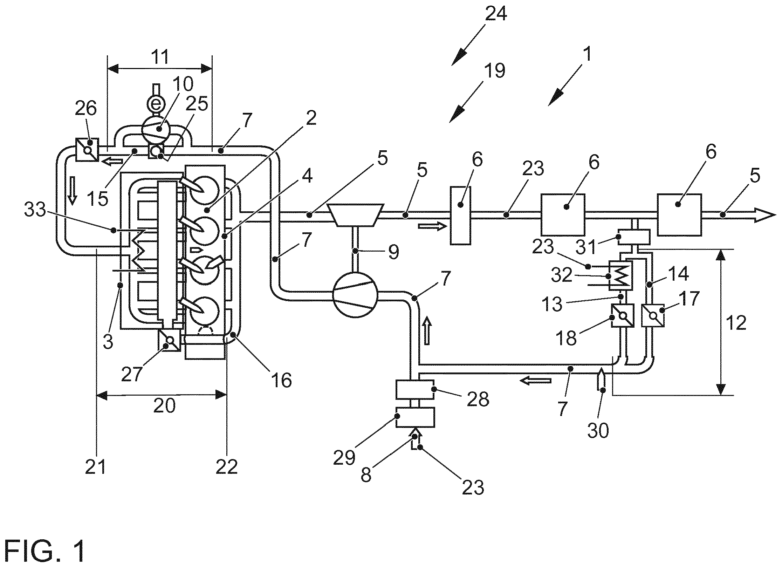

Die Figur 1 zeigt ein Kraftfahrzeug 24 mit einer Abgasrückführungsanordnung 1. Die Abgasrückführungsanordnung 1 für eine Verbrennungskraftmaschine 2 mit einer Einlassseite 3 und einer Auslassseite 4 für ein Abgas umfasst eine Abgas-Hauptleitung 5 mit einer Mehrzahl von Abgasnachbehandlungseinheiten 6. Weiter ist eine erste Abgas-Rückführleitung 7 vorgesehen, die einerseits mit der Abgas-Hauptleitung 5 und andererseits mit der Einlassseite 3 strömungsleitend verbindbar ist. Eine Gaszuführung 8 ist mit der ersten Abgas-Rückführleitung 7 strömungsleitend verbunden. Die Gaszuführung 8 weist einen Luftmassenmesser 28 und einen Luftfilter 29 auf. Ein Abgasturbolader 9 wirkt mit der Abgas-Hauptleitung 5 und der ersten Abgas-Rückführleitung 7 zusammen. Ein elektrisch angetriebener Verdichter 10 ist in einem Abschnitt 11 der ersten Abgas-Rückführleitung 7 zwischen dem Abgasturbolader 9 und der Einlassseite 3 angeordnet. Die erste Abgas-Rückführleitung 7 hat in einem Bereich 12 zwischen der Abgas-Hauptleitung 5 und dem Abgasturbolader 9 eine (aktiv regelbare) Kühlstrecke 13 und parallel dazu eine erste Bypassstrecke 14. Stromaufwärts des Bereichs 12 ist ein Filter 31 in der ersten Abgas-Rückführleitung 7 angeordnet.

Die Verbrennungskraftmaschine 2 weist eine Einlassseite 3 und eine Auslassseite 4 auf. Über die Einlassseite 3 tritt ein Gasgemisch in die Brennräume der Verbrennungskraftmaschine 2 ein. Über die Auslassseite 4 tritt das Abgas in die Abgas-Hauptleitung 5 ein. Die Abgas-Hauptleitung 5 verbindet die Auslassseite 4 der Verbrennungskraftmaschine 2 unter anderem mit der Umgebung, an die das Abgas letztendlich abgeführt wird. Die erste Abgas-Rückführleitung 7 ist eine Niederdruck-Abgas-Rückführleitung, die stromabwärts des Abgasturboladers 9 von der Abgas-Hauptleitung 5 abzweigt und zumindest einen Teilabgasstrom der Einlassseite 3 wieder zuführt. Die Gaszuführung 8 ist mit der Umgebung verbunden und leitet Frischluft an die Einlassseite 3 weiter. Der Abgasturbolader 9 wird über das Abgas in der Abgas-Hauptleitung 5 angetrieben und dient der Verdichtung des über die Gaszuführung 8 und/oder die erste Abgas-Rückführleitung 7 zugeführten Gases (Abgas, Frischluft, etc.).

Der Verdichter 10 ist in der ersten Abgas-Rückführleitung 7 angeordnet und kann eine (zusätzliche) Verdichtung des Gases bewirken, das der Einlassseite 3 zugeführt wird. Die erste Abgas-Rückführleitung 7 weist eine Kühlstrecke 13 mit einem Kühler 32 und eine erste Bypassstrecke 14 zur Umgehung der Kühlstrecke 13 und des Kühlers 32 auf.

Die Abgasrückführungsanordnung 1weist zusätzlich eine in dem Abschnitt 11 angeordnete zweite Bypassstrecke 15 zur Umgehung des Verdichters 10 auf. In der zweiten Bypassstrecke 15 ist ein Rückschlagventil 25 angeordnet, so dass bei Betrieb des Verdichters 10 das in der ersten Abgas-Rückführleitung 7 verdichtete Gas nicht über die zweite Bypassstrecke 15 zurückströmen kann. Zwischen dem Abschnitt 11 und der Einlassseite 3 ist eine Drosselklappe 26 angeordnet. Zwischen der Drosselklappe 26 und der Einlassseite 3 ist ein Ladeluftkühler 33 angeordnet.

Die Abgasrückführungsanordnung 1 umfasst zusätzlich eine zweite Abgas-Rückführleitung 16, die einerseits mit der Abgas-Hauptleitung 5 stromaufwärts des Abgasturboladers 9 und andererseits mit der Einlassseite 3 stromabwärts des Verdichters 10, stromabwärts der Drosselklappe 26 und stromabwärts des Ladeluftkühlers 33, strömungsleitend verbunden ist. Die zweite Abgas-Rückführleitung 16 ist eine Hochdruck-Abgas-Rückführleitung, die von der Abgas-Hauptleitung 5 stromaufwärts des Abgasturboladers 9 abzweigt und das Abgas zur Einlassseite 3 zurückführt. Die zweite Abgas-Rückführleitung 16 weist ein drittes Ventil 27 auf, über das die zweite Abgas-Rückführleitung 16 schließbar ist.

In Betriebspunkten 19 der Verbrennungskraftmaschine 2, in denen ein Betrieb des Verdichters 10 erforderlich oder wünschenswert ist, verringert sich eine Druckdifferenz 20 zwischen einem ersten Druck 21 an der Einlassseite 3 und einem zweiten Druck 22 an der Auslassseite 4 der Verbrennungskraftmaschine 2. Eine Abgasrückführung über die Hochdruck-Abgasrückführungseinrichtung kann dann nicht möglich sein. Für die Abgasbehandlung und zur Verringerung von Schadstoffen kann eine Abgasrückführung jedoch weiter wünschenswert sein.

Die hier vorgeschlagene Abgasrückführungsanordnung 1 mit der ersten Bypassstrecke 14 ermöglicht nun, dass auch bei diesen Betriebspunkten 19 die geforderte Abgasrückführung möglich ist. Dazu wird das Abgas über die erste Abgas-Rückführungsleitung 7 und in Abhängigkeit von der Temperatur 23 (zumindest des zuzuführenden Gases, des Abgases oder des Kühlmittels, ermittelbar z. B. über einen Sensor 30) über die Kühlstrecke 13 und/oder über die erste Bypassstrecke 14 zurückgeführt. Das zurückgeführte Abgas wird über den Verdichter 10 auf einen höheren ersten Druck 21 verdichtet und über die Einlassseite 3 der Verbrennungskraftmaschine 2 zugeführt.

Die Anordnung von erster Abgas-Rückführleitung 7 und zweiter Abgas-Rückführleitung 16 zusammen mit der ersten Bypassstrecke 14 ermöglicht eine Umgehung der zweiten Abgas-Rückführleitung 16 bei Betrieb des Verdichters 10.

In der ersten Bypassstrecke 14 ist ein erstes Ventil 17 angeordnet. In der Kühlstrecke 13 ist stromabwärts von dem Kühler 32 ein zweites Ventil 18 angeordnet. Über das erste Ventil 17 und das zweite Ventil 18 wird eine Aufteilung der Teilabgasströme vorgenommen, die über die Kühlstrecke 13 und/oder die erste Bypassstrecke 14 hin zur Einlassseite 3 zurückgeführt werden.

### Bezugszeichenliste

- 1: Abgasrückführungsanordnung
- 2: Verbrennungskraftmaschine
- 3: Einlassseite
- 4: Auslassseite
- 5: Abgas-Hauptleitung
- 6: Abgasnachbehandlungseinheit
- 7: erste Abgas-Rückführleitung
- 8: Gaszuführung
- 9: Abgasturbolader
- 10: Verdichter
- 11: Abschnitt
- 12: Bereich
- 13: Kühlstrecke
- 14: erste Bypassstrecke
- 15: zweite Bypassstrecke
- 16: zweite Abgas-Rückführleitung
- 17: erstes Ventil
- 18: zweites Ventil
- 19: Betriebspunkt
- 20: Druckdifferenz
- 21: erster Druck
- 22: zweiter Druck
- 23: Temperatur
- 24: Kraftfahrzeug
- 25: Rückschlagventil
- 26: Drosselklappe
- 27: drittes Ventil
- 28: Luftmassenmesser
- 29: Luftfilter
- 30: Sensor
- 31: Filter
- 32: Kühler
- 33: Ladeluftkühler

## Patentansprüche

1. Abgasrückführungsanordnung (1) für eine Verbrennungskraftmaschine (2) mit einer Einlassseite (3) und einer Auslassseite (4) für ein Abgas, zumindest umfassend:
- eine Abgas-Hauptleitung (5) zur Aufnahme mindestens einer Abgasnachbehandlungseinheit (6), die stromabwärts der Auslassseite (4) der Verbrennungskraftmaschine (2) anordenbar ist;
- eine erste Abgas-Rückführleitung (7), die einerseits mit der Abgas-Hauptleitung (5) und andererseits mit der Einlassseite (3) strömungsleitend verbindbar ist;
- eine Gaszuführung (8), welche mit der ersten Abgas-Rückführleitung (7) strömungsleitend verbindbar ist;
- einen Abgasturbolader (9), der mit der Abgas-Hauptleitung (5) und der ersten Abgas-Rückführleitung (7) zusammenwirkt; und
- einen elektrisch angetriebenen Verdichter (10), der in einem Abschnitt (11) der ersten Abgas-Rückführleitung (7) angeordnet ist;
wobei die erste Abgas-Rückführleitung (7) in einem Bereich (12) zwischen der Abgas-Hauptleitung (5) und dem Abgasturbolader (9) eine Kühlstrecke (13) und parallel dazu eine erste Bypassstrecke (14) hat.

2. Abgasrückführungsanordnung (1) nach Patentanspruch 1, umfassend zumindest eine in dem Abschnitt (11) angeordnete zweite Bypassstrecke (15) zur Umgehung des Verdichters (10).

3. Abgasrückführungsanordnung (1) nach einem der vorhergehenden Patentansprüche, wobei der Verdichter (10) in dem Abschnitt (11) zwischen dem Abgasturbolader (9) und der Einlassseite (3) oder zwischen der Gaszuführung (8) und dem Abgasturbolader (9) angeordnet ist.

4. Abgasrückführungsanordnung (1) nach einem der vorhergehenden Patentansprüche, umfassend zumindest eine zweite Abgas-Rückführleitung (16), die einerseits mit der Abgas-Hauptleitung (5) stromaufwärts des Abgasturboladers (9) und andererseits mit der Einlassseite (3) stromabwärts des Verdichters (10) strömungsleitend verbindbar ist.

5. Abgasrückführungsanordnung (1) nach einem der vorhergehenden Patentansprüche, bei der in der ersten Bypassstrecke (14) ein erstes Ventil (17) angeordnet ist.

6. Abgasrückführungsanordnung (1) nach einem der vorhergehenden Patentansprüche, bei der die Kühlstrecke (13) einen Flüssigkeitswärmetauscher umfasst.

7. Abgasrückführungsanordnung (1) nach Patentanspruch 6, bei der in der Kühlstrecke (13) stromabwärts des Flüssigkeitswärmetauschers ein zweites Ventil (18) angeordnet ist.

8. Verfahren zum Betrieb einer Abgasrückführungsanordnung (1) einer Verbrennungskraftmaschine (2) mit einer Einlassseite (3) und einer Auslassseite (4) für ein Abgas, wobei die Abgasrückführungsanordnung (1) zumindest umfasst:
- eine Abgas-Hauptleitung (5) zur Aufnahme mindestens einer Abgasnachbehandlungseinheit (6), die stromabwärts der Auslassseite (4) der Verbrennungskraftmaschine (2) anordenbar ist;
- eine erste Abgas-Rückführleitung (7), die einerseits mit der Abgas-Hauptleitung (5) und andererseits mit der Einlassseite (3) strömungsleitend verbindbar ist;
- eine Gaszuführung (8), welche mit der ersten Abgas-Rückführleitung (7) strömungsleitend verbindbar ist;
- einen Abgasturbolader (9), der mit der Abgas-Hauptleitung (5) und der ersten Abgas-Rückführleitung (7) zusammenwirkt; und
- einen elektrisch angetriebenen Verdichter (10), der in einem Abschnitt (11) der ersten Abgas-Rückführleitung (7) angeordnet ist;
- eine zweite Abgas-Rückführleitung (16), die einerseits mit der Abgas-Hauptleitung (5) stromaufwärts des Abgasturboladers (9) und andererseits mit der Einlassseite (3) stromabwärts des Verdichters (10) strömungsleitend verbindbar ist;
wobei die erste Abgas-Rückführleitung (7) in einem Bereich (12) zwischen der Abgas-Hauptleitung (5) und dem Abgasturbolader (9) eine Kühlstrecke (13) und parallel dazu eine erste Bypassstrecke (14) hat; wobei das Verfahren zumindest die folgenden Schritte umfasst:
i. Erfassen eines Betriebspunktes (19) der Verbrennungskraftmaschine (2), bei dem der Verdichter (10) in Betrieb ist und eine Druckdifferenz (20) zwischen einem ersten Druck (21) an der Einlassseite (3) und einem zweitem Druck (22) an der Auslassseite (4) kleiner ist als ein Druckschwellwert;
ii. Erfassen, ob eine Abgasrückführung erforderlich ist und wenn ja
iii. Rückführen des Abgases ausschließlich über die erste Abgas-Rückführleitung (7), wobei die zweite Abgas-Rückführleitung (16) geschlossen ist; wobei das Abgas zumindest teilweise über die erste Bypassstrecke (14) geleitet wird.

9. Verfahren nach Patentanspruch 8, wobei in Abhängigkeit von einer aktuellen Temperatur (23) zumindest für das zuzuführende Gas, das Abgas oder ein Kühlmittel in Schritt iii. das Abgas über die erste Bypassstrecke (14) geführt wird.

10. Kraftfahrzeug (24) mit einer Verbrennungskraftmaschine (2) mit einer Einlassseite (3) und einer Auslassseite (4) für ein Abgas und einer Abgasrückführungsanordnung (1) nach einem der vorhergehenden Patentansprüche 1 bis 7, wobei die Abgasrückführungsanordnung (1) zusätzlich eine zweite Abgas-Rückführleitung (16) umfasst, die einerseits mit der Abgas-Hauptleitung (5) stromaufwärts des Abgasturboladers (9) und andererseits mit der Einlassseite (3) stromabwärts des Verdichters (10) strömungsleitend verbindbar ist; wobei das Kraftfahrzeug (24) zur Durchführung des Verfahrens nach einem der vorhergehenden Patentansprüche 8 und 9 eingerichtet ist.
